Europäisches Patentamt

European Patent Office

Office européen des brevets

(19)

(11) **EP 1 501 178 A2**

(12) **EUROPEAN PATENT APPLICATION**

(43) Date of publication:
**26.01.2005 Bulletin 2005/04**

(51) Int Cl.⁷: **H02M 3/156**, H02H 3/04,
H02H 7/08

(21) Application number: **04015338.9**

(22) Date of filing: **30.06.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **01.07.2003 IT TO20030506**

(71) Applicant: **BTM S.r.l.
10123 Torino (IT)**

(72) Inventor: **Marchitto, Luciano
10015 Ivrea (Torino) (IT)**

(74) Representative: **Quinterno, Giuseppe et al
Jacobacci & Partners S.p.A.,
Corso Regio Parco, 27
10152 Torino (IT)**

(54) **A circuit for driving a load, in particular a direct-current electric motor**

(57) The circuit (1) comprises:

a direct-current voltage source (2) to a first terminal of which a first terminal (3a) of the load (3) is connected,
at least one MOSFET transistor (Q, Q1) having a first terminal and a second terminal which are connected to the other or second terminal (3b) of the load (3) and to the other terminal (GND) of the source (2), respectively, and a control terminal which is intended to receive a signal for controlling conduction,
a diagnosis terminal (D) connected to the first terminal of the transistor (Q, Q1), and
a control circuit (6) connected to the control terminal of the transistor (Q) and having an input which is intended to receive a control voltage ($V_c$) for regulating the current in the load (3), that input being connected by means of a first resistor (R2), to the first terminal of the transistor (Q, Q1),
an electronic switch (M) arranged in series with an additional resistor (R) between the first terminal of the transistor (Q, Q1) and the second terminal (GND) of the voltage source (2), and
an enabling circuit (40) which is suitable for rendering the electronic switch (M) conductive (closed) when the circuit (1) for driving the load is operating.

The additional resistor (R) has a resistance such that, in the event of an interruption in electrical continuity between the first terminal of the source (2) and the first terminal of the transistor (Q, Q1), a voltage ($V_D$) having a predetermined minimum value appears at the diagnosis terminal (D).

EP 1 501 178 A2

**Description**

The present invention relates to a circuit for driving an electrical load, in particular for driving a direct-current electric motor.

More specifically, the invention relates to a driving circuit comprising:

a direct-current voltage source to a first terminal of which a first terminal of the load is connected,

at least one electronic device with controlled conduction, in particular, a MOSFET transistor having a first terminal and a second terminal which are connected to the other or second terminal of the load and to the other or second terminal of the voltage source, respectively, and a control terminal which is intended to receive a signal for controlling conduction,

a diagnosis terminal connected to the first terminal of the device with controlled conduction, and

a control circuit connected to the control terminal of the device with controlled conduction and having an input which is intended to receive a voltage for regulating the current in the load, that input being connected, by means of a first resistor, to the first terminal of the device with controlled conduction.

In a driving circuit of this type, the difference between the voltage supplied by the source and the voltage which is present at the diagnosis terminal in operation is normally indicative of the voltage which is located in the load. If the load is constituted by an electric motor, that voltage difference is a voltage the value of which corresponds to the rate of rotation of the motor.

In the event of an interruption in electrical continuity between the first terminal (the positive terminal) of the voltage source and the above-mentioned first terminal (drain) of the device with controlled conduction (MOSFET transistor), in operation, the difference between the voltage supplied by the source and the voltage which is located at the diagnosis terminal adopts a value corresponding to the maximum rate of rotation of the motor whereas, in those conditions, the motor is actually stationary.

The object of the present invention is to provide a driving circuit of the above-mentioned type which overcomes the problem outlined above and in particular enables an indication to be provided in the event of an interruption in electrical continuity between the voltage source and the controlled switching device used to drive the motor, in operation. An interruption in electrical continuity of this type may occur as a result of the breaking of a connection, an interruption within the load (the motor), or the intervention of any fusible protection element that may be provided in series with the load.

This and other objects are achieved, according to the invention by a driving circuit of the type specified above, characterized in that it further comprises:

an electronic switch arranged in series with an additional resistor between the first terminal of the device with controlled conduction and the second terminal of the voltage source, and

an enabling circuit which is suitable for rendering the electronic switch conductive (closed) when the circuit for driving the load is operating,

the additional resistor having a resistance such that, in the event of an interruption in electrical continuity between the first terminal of the source and the first terminal of the device with controlled conduction, a voltage having a predetermined minimum value appears at the diagnosis terminal.

Further characteristics and advantages of the invention will become clear from the following detailed description which is given purely by way of non-limiting example, with reference to the appended drawing in which an embodiment of a driving circuit according to the invention is shown.

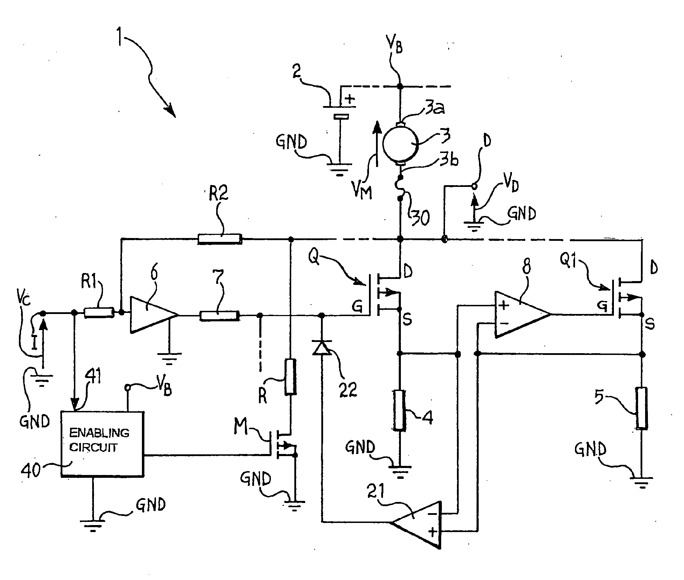

In Figure 1, a driving circuit according to the invention is generally indicated 1.

The circuit comprises a direct-current voltage source 2 such as, for example, a battery.

In the embodiment shown, the source 2 has its negative terminal connected to the earth GND and its positive terminal connected to a first terminal 3a of a load 3, represented by a direct-current electric motor. The other terminal 3b of the load 3 is connected to the earth GND via a first circuit branch which comprises an electronic driver device with controlled conduction or master device, indicated Q, and a resistor 4 which acts as a sensor of the current flowing through the master device Q in operation.

A fusible protection element 30 is advantageously arranged between the source 2 and the master device Q, in series with the load 3.

In the embodiment shown by way of example, at least one further circuit branch is connected in parallel with the first circuit branch and comprises an electronic driver device with controlled conduction or slave device Q1, and an associated resistor 5 which acts as a sensor of the current flowing through the slave device.

The master device Q and the slave device Q1 are advantageously MOSFET transistors.

The input terminal or gate of the master device Q is connected to the output of a control amplifier 6 via a resistor 7. The input of the amplifier 6 is connected via a resistor R1 to an input terminal I of the driving circuit 1 which is intended to receive a voltage $V_c$ for regulating the current in the load 3.

The input of the amplifier 6 is connected via a second resistor R2 to the above-mentioned first terminal (drain) of the device with controlled conduction Q.

A diagnosis terminal or output of the driving circuit 1 is indicated D. This terminal D is connected to the first terminal (drain) of the MOSFET transistor Q.

A further amplifier (for example, an operational amplifier), indicated 8 in Figure 1, has its non-inverting input and its inverting input connected to the resistors 4 and 5 in the manner illustrated and its output connected to the input terminal or gate of the slave transistor Q1.

A further comparator, indicated 21, is constituted, for example, by an operational amplifier having a first input and a second input which are connected to the resistors 4 and 5 in the manner shown. The output of the comparator is connected to the input or gate of the master transistor Q via a diode 22.

The driving circuit 1 further comprises an enabling circuit 40. As will become clearer from the following description, this circuit is arranged to detect whether the driving circuit 1 as a whole is operating and, in that case, renders conductive an electronic switch M, which is also advantageously constituted by a MOSFET transistor and is arranged in series with a further resistor R between the said first terminal (drain) of the MOSFET transistor Q and the earth GND.

In the embodiment shown, the enabling circuit 40 has an input 41 connected to the control input I of the driving circuit 1.

The additional resistor R has a resistance value such that, in the event of an interruption in electrical continuity between the positive terminal of the voltage source 2 and the drain of the MOSFET transistor 2, a voltage $V_D$ which has a predetermined minimum value appears at the diagnosis terminal D. In these conditions, the voltage $V_D$ adopts substantially the following value:

$$V_D = V_C \, R/(R_1 + R_2 + R)$$

By appropriate selection of the resistance value of the resistor R, it is possible, in particular, to arrange for the voltage $V_D$ at the diagnosis terminal, in a condition of interrupted electrical continuity as defined above, to be below the value which that voltage adopts when the load 3 is operating normally in conditions of maximum voltage and minimum current.

Naturally, the principle of the invention remaining the same, the forms of embodiment and details of construction may be varied widely with respect to those described and illustrated purely by way of non-limiting example, without thereby departing from the scope of the invention as defined in the appended claims.

**Claims**

1. A circuit (1) for driving a load (3), in particular a direct-current electric motor (3), comprising:

   a direct-current voltage source (2) to a first terminal of which a first terminal (3a) of the load (3) is connected,
   at least one electronic device with controlled conduction (Q, Q1), in particular, a MOSFET transistor (Q, Q1), having a first terminal and a second terminal which are connected to the other or second terminal (3b) of the load (3) and to the other or second terminal (GND) of the source (2), respectively, and a control terminal which is intended to receive a signal for controlling conduction,
a diagnosis terminal (D) connected to the first terminal of the device with controlled conduction (Q, Q1), and
a control circuit (6) connected to the control terminal of the device with controlled conduction (Q) and having an input which is intended to receive a control voltage ($V_C$) for regulating the current in the load (3), that input being connected, by means of a first resistor (R2), to the first terminal of the device with controlled conduction (Q, Q1),
the driving circuit (1) being **characterized in that** it further comprises:

   an electronic switch (M) arranged in series with an additional resistor (R) between the first terminal of the device with controlled conduction (Q, Q1) and the second terminal (GND) of the voltage source (2), and
   an enabling circuit (40) which is suitable for rendering the electronic switch (M) conductive (closed) when the circuit (1) for driving the load is operating,
   the additional resistor (R) having a resistance such that, in the event of an interruption in electrical continuity between the first terminal of the source (2) and the first terminal of the device with controlled conduction (Q, Q1), a voltage ($V_D$) having a predetermined minimum value appears at the diagnosis terminal (D).

2. A driving circuit according to Claim 1 in which the enabling circuit (40) has an input (41) which is connected to the input of the control circuit (6) in order to detect the presence of the above-mentioned control voltage ($V_C$) for regulating the current in the load (3) and is arranged to keep the electronic switch (M) conductive only as long as that control voltage ($V_C$) is present.

3. A driving circuit according to Claim 1 or Claim 2 in which the resistance of the additional resistor (R) is such that, in the event of an interruption in electrical continuity between the first terminal of the voltage source (2) and the first terminal of the device with controlled conduction (Q, Q1), the voltage ($V_D$) which appears at the diagnosis terminal (D) is less than the voltage which is present at that diagnosis terminal (D) when the load (3) is operating in conditions of maximum voltage and minimum current.